# EUROPÄISCHE PATENTANMELDUNG

(11) **EP 2 708 314 A2**
(43) Veröffentlichungstag der Anmeldung: **19.03.2014**
(21) Anmeldenummer: 13004075.1
(22) Anmeldetag: 16.08.2013
(51) Int. Cl.: B23Q 9/00, B23B 29/02

(54) **Mobile Drehvorrichtung und Anordnung zur Bearbeitung fluchtender Bohrungen in einem Maschinengehäuse**

(30) Priorität: 18.09.2012 DE 102012018436
(71) Anmelder: Vakoma GmbH, 3911 Magdeburg (DE)
(72) Erfinder: Klaer, Stefan, D-39118 Magdeburg (DE); Krossing, Gerhard, D-39114 Magdeburg (DE); Krossing, Christoph, B., D-39114 Magdeburg (DE); Gshibowski, Alexander, D-39104 Magdeburg (DE)
(74) Vertreter: Fischer, Volker

(57) **Zusammenfassung**

Die Erfindung betrifft eine mobile Drehvorrichtung (1) zur Bearbeitung fluchtender Bohrungen (23) in einem Maschinengehäuse (22), wobei die fluchtenden Bohrungen (23) eine Bohrungsgasse bilden und die jeweils äußeren Bohrungen (23) der Bohrungsgasse in sich gegenüberliegenden Außenwänden des Maschinengehäuses (22) liegen. Die Erfindung betrifft außerdem eine Anordnung der mobilen Drehvorrichtung (1) in einem Maschinengehäuse (22).

Eine erfindungsgemäße mobile Drehvorrichtung (1) besitzt eine länger als die Bohrungsgasse ausgebildete Welle (2) und einen rohrförmig ausgebildeten, in Längsrichtung der Welle (2) verschiebbaren, mit der Welle (2) drehverbundenen Werzeugträger (3), der die Welle (2) in Längsrichtung zu mindestens 50 % ihrer Länge, bevorzugt zu mehr als 2/3 ihrer Länge, umhüllt und sich mindestens an seinen beiden stirnseitigen Enden auf der Welle (2) abstützt. Dabei sind die beiden Wellenenden nicht vom Werkzeugträger (3) umhüllt und als Lagerzapfen (6) ausgebildet. An einem Wellenende ist eine die mobile Drehvorrichtung (1) in Drehbewegung versetzende Antriebseinrichtung (7) und an dem anderen Wellenende eine Stelleinrichtung (8) angeordnet, mittels derer der Werkzeugträger (3) in Längsrichtung der Welle (2) verschiebbar ist. Der Werkzeugträger (3) weist an seiner äußeren Umfangsfläche Mittel zur lagegenauen Anordnung von Schneidmitteln (4) auf.

## Beschreibung

Die Erfindung betrifft eine mobile Drehvorrichtung zur Bearbeitung fluchtender Bohrungen in einem Maschinengehäuse, wobei die fluchtenden Bohrungen eine Bohrungsgasse bilden und die jeweils äußeren Bohrungen der Bohrungsgasse in sich gegenüberliegenden Außenwänden des Maschinengehäuses liegen, und eine Anordnung der mobilen Drehvorrichtung in einem Maschinengehäuse. Ein bevorzugtes Anwendungsgebiet der Erfindung ist die Instandsetzung gebrauchter Maschinengehäuse am Aufstellungsort.

Mobile Drehvorrichtungen zur Bearbeitung fluchtender Bohrungen in einem Maschinengehäuse sind aus dem Stand der Technik bekannt. So wird in der DD 112 616 A ein transportables Bohrwerk zum Ausdrehen von geschlossenen Turbinengehäusen, insbesondere von Stopfbuchspartien und Nuten, beschrieben, bei dem eine Bohrwelle mittels an ihren Enden über Lager drehbar um die Längsachse der Bohrwelle angeordnete Zentrierscheiben in die zu bearbeitende Bohrungsgasse einsetzbar und im Turbinengehäuse einspannbar ist. Die Außendurchmesser der Zentrierscheiben entsprechen den Durchmessern der Lager im Turbinengehäuse, in die die Bohrwelle einsetzbar sind. Über die Zentrierscheiben erfolgt somit eine Ausrichtung der Bohrwelle in der Lagergasse. An der Bohrwelle sind ein in Längsrichtung der Bohrwelle verschiebbarer Werkzeugträger, eine Antriebseinheit und ein Nortongetriebe angeordnet. Derartige Bohrwellen besitzen ein hohes Gewicht, sind daher umständlich und aufwändig handhabbar und erfordern einen hohen Justieraufwand. Hinzu kommt die Gefahr der Durchbiegung langer Bohrwellen und daraus resultierenden Ungenauigkeiten in den Abmessungen und der Lage der bearbeiteten Bohrungsflächen.

Aus der DE 27 58 742 C2 ist eine Vorrichtung zum Bearbeiten von fluchtenden Bohrungen insbesondere zu Reparaturarbeiten bekannt, bei der im Bereich der zu bearbeitenden Bohrung eine diese durchsetzende angetriebene Hohlwelle angeordnet ist, die über einen bezüglich der Mittelachse der Bohrungen ausgerichteten Laserstrahl justierbar ist, wobei der Laserstrahl über in benachbarten Bohrungen angeordneten Zentrierscheiben auf die Mittelachse der Bohrungen justierbar ist. Die Hohlwelle ist in zwei seitlich der zu bearbeitenden Bohrung angeordneten Lagerböcken gelagert. Die Lagerböcke stützen sich auf dem Maschinengehäuse oder dem Fundament der Maschine ab. Auf der Hohlwelle ist ein entlang der Längsachse der Hohlwelle verschiebbares Werkzeug angeordnet, mittels dessen in Verbindung mit der Drehung der Hohlwelle die Lagerbohrung bearbeitbar ist. Die in den benachbarten fluchtenden Bohrungen angeordneten Zentrierscheiben stützen sich über Spannschrauben an den Bohrungsflächen ab und sind derart durch Spannen in den Bohrungen befestigt. Die Justierung der Zentrierscheiben erfolgt durch Verstellung der Spannschrauben. Zwischen den Justierscheiben und der Hohlwelle sind Schutzrohre angeordnet, die den Bereich der Mittelachse der Bohrungen umgeben, wodurch eine Störung des Laserstrahles, beispielsweise durch Eindringen von Spänen in diesen Bereich, vermieden werden soll. Nachteilig bei dieser Lösung ist, dass zur Lagerung der Hohlwelle beidseitig der zu bearbeitenden Bohrung angeordnete Lagerböcke erforderlich sind, die mit dem Maschinengehäuse oder dem Fundament der Maschine fest verbunden sein müssen. Für die Bearbeitung mehrerer fluchtender Bohrungen kann es erforderlich sein, die Hohlwelle mehrfach, das heißt an jeder zu bearbeitenden Bohrung, anzuordnen und zu justieren. Beides ist mit einem hohen Arbeits- und Zeitaufwand verbunden. Hinzu kommt, dass durch eine Mehrfachjustierung eine erhebliche Gefahr für Ungenauigkeiten in den bearbeiteten Bohrungsflächen, insbesondere bezüglich ihrer Lage zur gemeinsamen Fluchtachse, besteht.

Aus der EP 0 981 416 B1 ist ein Werkzeug zur Bearbeitung fluchtender, in einer Achse liegender Bohrungen in einem Werkstück bekannt, das einen zylindrischen Grundkörper aufweist, der Schneiden zur Bearbeitung der Bohrungen trägt und in dem wenigstens ein bevorzugt radial verstellbares Hubelement angeordnet ist, mit dem der Grundkörper aus einer in Bezug auf die gemeinsame Achse der zu bearbeitenden Bohrungen exzentrischen Einführlage in eine zentrische Bearbeitungslage bewegbar ist. Der Grundkörper stützt sich während der Bearbeitung der Bohrungen an mindestens einem Führungslager ab. Dabei liegen bevorzugt drei in einer Querschnittsebene um den Umfang des Grundkörpers angeordnete radial verstellbare Hubelemente an einem Innenring des Führungselementes an. Nachteilig hierbei ist, dass die mit einer vergleichsweise kleinen Flächen an dem Innenring eines Führungselementes anliegenden Hubelemente das gesamte Gewicht des Werkzeuges tragen und die Bearbeitungskräfte aufnehmen. Dies führt zu erheblichen Ungenauigkeiten bei der Ausrichtung des Werkzeuges innerhalb der fluchtenden Bohrungen und nachfolgend zu Bearbeitungsungenauigkeiten. Hinzu kommt ein vergleichsweise komplizierter und störanfälliger Aufbau des Werkzeuges, insbesondere der Hubelemente.

Zur Bearbeitung von fluchtender Bohrungen in einem Maschinengehäuse sind darüber hinaus beispielsweise aus der DE 20 52 020 A Bohrstangen mit daran angeordneten Schneidwerkzeugen bekannt, die an einer Bohrvorrichtung angeordnet sind und mit ihrem freien Ende in die zu bearbeitenden Bohrungen eingeführt werden. Bohrstangen können ein an ihrem freien Ende angebrachtes Schneidwerkzeug zur Bearbeitung einer Bohrung oder mehrere über die Länge der Bohrstange verteilt angebrachte Schneidwerkzeuge zur Bearbeitung mehrerer Bohrungen aufweisen. Der Nachteil derartiger Bohrstangen besteht in einer geringen mechanischen Stabilität, die mit zunehmender Länge der Bohrstange abnimmt. Eine für viele Anwendungsfälle unzureichende Genauigkeit in den Abmessungen und der Lage der bearbeiteten Bohrungsflächen ist die Folge.

Zu Beseitigung dieses Nachteiles wird in der DE 41 21 495 C1 eine Bohrstange mit einer langgestreckten rotierenden Spindel, an deren freiem Ende ein Schneidwerkzeug angeordnet ist, vorgeschlagen, wobei zur Abstützung der Spindel ein diese aufnehmendes, langgestrecktes Hüllrohr vorgesehen ist, welches am Gehäuse der Bohrvorrichtung befestigt ist und in dem die Bohrspindel mit ihrem freien Ende drehbar gelagert ist. Der äußere Durchmesser des Hüllrohres ist dabei so bemessen, dass das Hüllrohr gegenüber dem Schneidwerkzeug ein Untermaß aufweist. Auch diese Lösung vermag nicht, das Problem einer geringen mechanischen Stabilität von Bohrstangen und die daraus resultierende unzureichende Maß- und Lagegenauigkeit der bearbeiteten Bohrungsflächen zu lösen.

Ziel der Erfindung ist die Bereitstellung einer mobile Drehvorrichtung zur Bearbeitung fluchtender Bohrungen in einem Maschinengehäuse sowie eine Anordnung der mobilen Drehvorrichtung in dem Maschinengehäuse, mit denen die genannten Nachteile des Standes der Technik überwunden werden. Insbesondere ist es die Aufgabe der Erfindung, eine hinreichend mechanisch stabile Drehvorrichtung und eine Anordnung dieser Drehvorrichtung in dem Maschinengehäuse zu schaffen, mit der fluchtende Bohrungen in Maschinenengehäusen maßgenau bearbeitet werden können.

Diese Aufgabe wird erfindungsgemäß durch eine mobile Drehvorrichtung gelöst, die mindestens die im Anspruch 1 genannten Merkmale umfasst, sowie durch eine Anordnung, die mindestens die Merkmalen des Anspruches 6 umfasst. Zweckmäßige Weiterbildungen der mobile Drehvorrichtung sind in den Ansprüchen 2 bis 5 und zweckmäßige Weiterbildungen der Anordnung der mobilen Drehvorrichtung in einem Maschinengehäuse in den Ansprüchen 7 und 8 beschrieben.

Eine mobile Drehvorrichtung zur Bearbeitung fluchtender Bohrungen in einem Maschinengehäuse, wobei die Bohrungen eine das Maschinengehäuse durchspannende Bohrungsgasse bilden und die jeweils äußeren Bohrungen der Bohrungsgasse in sich gegenüberliegenden Außenwänden des Maschinengehäuses liegen, besitzt eine länger als die Bohrungsgasse ausgebildete Welle und einen rohrförmig ausgebildeten, in Längsrichtung der Welle verschiebbarem, mit der Welle drehverbundenen Werzeugträger, der die Welle in Längsrichtung zu mindestens 50 % ihrer Länge, bevorzugt zu mehr als 2/3 ihrer Länge, umhüllt und sich mindestens an seinen beiden stirnseitigen Enden auf der Welle abstützt. Dabei sind die beiden Wellenenden nicht vom Werkzeugträger umhüllt und als Lagerzapfen ausgebildet. An einem Wellenende ist eine die mobile Drehvorrichtung in Drehbewegung versetzende Antriebseinrichtung und an dem anderen Wellenende eine Stelleinrichtung angeordnet, mittels derer der Werkzeugträger in Längsrichtung der Welle verschiebbar ist. Der Werkzeugträger weist an seiner äußeren Umfangsfläche Mittel zur lagegenauen Anordnung von Schneidmitteln auf.

Durch die langgestreckte Ausbildung des Werkzeugträgers mit einer Länge von bevorzugt mehr als 2/3 der Wellenlänge und die Abstützung des Werkzeugträgers an seinen beiden stirnseitigen Enden auf der Welle ist die mobile Drehvorrichtung über die Länge des Werkzeugträgers quasi als koaxiale Anordnung ausgebildet und besitzt so hohe mechanische Steifigkeit gegenüber einer Biegebeanspruchung. Dabei ist zum einen der in Längsrichtung der mobilen Drehvorrichtung mittlere Bereich durch die koaxiale Ausbildung besonders biegesteif, während die beiden nicht vom Werkzeugträger umhüllten Enbereiche der Welle durch die Abstützung des Werkzeugträgers auf der Welle im Bereich der Wellenenden relativ kurz bemessen und damit eine Biegebeanspruchung der Welle allein, d.h. ohne mechanische Wirkverbindung mit dem Werkzeugträger nur entlang eines kurzen Wellenabschnittes, erfolgt. Beides führt zu der genannten hohen mechanischen Steifigkeit der mobilen Drehvorrichtung und damit zu einer hohen Maßgenauigkeit der Bearbeitung der Bohrungen.

Bevorzugt ist die Welle als Hohlwelle mit zwei massiven Wellenenden ausgebildet. Im inneren der Welle befindet sich eine von der Stelleinrichtung zum Verschieben des Werkzeugträgers in Längsrichtung der Welle angetriebene Spindel mit einer Spindelmutter. Die Spindelmutter ist mit dem Werkzeugträger verbunden, und zwar derart, dass bei einer Drehung der Spindel eine Verschiebung der Spindelmutter und des Werkzeugträgers in Längsrichtung der Welle erfolgt, der Werkzeugträger jedoch um die Spindelmutter drehbar ist, ohne dass eine Verschiebung der Spindelmutter oder den Werkzeugträgers in Längsrichtung der Welle bewirkt wird.

Zweckmäßig stehen die Drehachsen des Motors der Antriebseinrichtung zur Erzeugung der Drehbewegung der mobilen Drehvorrichtung und des Motors der Stelleinrichtung zum Verschieben des Werkzeugträgers in Längsrichtung der Welle jeweils in einem Winkel von etwa 90° zur Längsachse der Welle, wobei dann weiterhin zweckmäßig die Antriebseinrichtung zur Erzeugung der Drehung der mobilen Drehvorrichtung und die Stelleinrichtung zum Verschieben des Werkzeugträgers in Längsrichtung der Welle um die Längsachse der Welle verdrehbar angeordnet sind. Ersteres führt zu einer platzsparenden kompakten Bauweise der mobilen Drehvorrichtung, während zweiteres eine Ausrichtung der Antriebseinrichtung und der Stelleinrichtung entsprechend den jeweiligen Gegebenheiten am Einsatzort der mobilen Drehvorrichtung ermöglicht.

Ebenfalls zweckmäßig ist die Ausbildung von Messflächen an der Umfangsfläche der Welle sowie der äußeren Umfangsfläche des Werkzeugträgers. Die Ausbildung von derartigen Messflächen erleichtert die Lagebestimmung der mobilen Drehvorrichtung in einem Maschinengehäuse bzw. die Lagebestimmung von Bezugsflächen oder -punkten innerhalb eines Maschinengehäuses zur mobilen Drehvorrichtung.

Die Anordnung der mobile Drehvorrichtung in einem Maschinengehäuse zur Bearbeitung fluchtenden Bohrungen in dem Maschinengehäuse erfolgt erfindungsgemäß derart, dass an den Außenseiten der Außenwände des Maschinengehäuses, die jeweils äußeren Bohrungen der Bohrungsgasse umgebend, Lagerhalterungen zur Halterung von Lagern für die Lagerung der beiden Wellenenden der Welle der mobilen Drehvorrichtung vorgesehen sind und die mobile Drehvorrichtung mittels der vorgenannten Lager in dem Maschinengehäuse, die zu bearbeitende Bohrungsgasse durchspannend, drehbar gelagert wird, und zwar derart, dass der Werkzeugträger innerhalb des Maschinengehäuses in Längsrichtung verschiebbar positioniert ist. Die Lagerhalterungen umfassen Mittel zum Verschieben der Lager in etwa quer zur Längsachse der mobilen Drehvorrichtung liegenden Ebenen, so dass dadurch die Längsachse der mobilen Drehvorrichtung gegenüber der Achse der Bohrungsgasse verschieb- und neigbar ist. Damit wird eine in Bezug auf vorgegebene Bezugsflächen oder -punkte innerhalb des Maschinengehäuses lagegenaue Positionierung der mobilen Drehvorrichtung in einer Bohrungsgasse ermöglicht, so dass eine maßgenaue und lagegenaue Bearbeitung der Bohrungen der Bohrungsgasse mittels der am Werkzeugträger angeordneten Schneidwerkzeuge erfolgen kann. Bevorzugt sind die Mittel zum Verschieben der Lager in etwa quer zur Längsachse der mobilen Drehvorrichtung liegenden Ebenen Exzenterstelleinrichtungen, wobei eine Exzenterstelleinrichtung besonders bevorzugt von zwei ineinanderliegenden gegeneinander verdrehbaren exzentrischen Ringen gebildet wird. Die beiden exzentrischen Ringe sind dabei in einer etwa quer zur Längsachse der Welle liegenden Ebene gegeneinander verdrehbar. Das Lager zur Lagerung der Welle ist bevorzugt innerhalb des inneren Ringes angeordnet, während der äußere Ring in der ortsfest am Maschinengehäuse angebrachten Lagerhalterung angeordnet ist. Durch Verdrehen der beiden exzentrischen Ringe gegeneinander kann der Drehpunkt des im inneren Ring angeordneten Lagers in vorgenannter, etwa quer zur Längsachse der Welle liegender Ebene um einen vorgebbaren Verschiebeweg verschoben werden. Bevorzugt umfasst jede der beiden Lagerhalterungen eine Exzenterstelleinrichtung, so dass die Längsachse der mobilen Drehvorrichtung innerhalb der Bohrungsgasse und innerhalb des Maschinengehäuses entsprechend dem möglichen Verschiebeweg der Exzenterstelleinrichtungen frei verschoben und so positioniert werden kann. Selbstverständlich umfasst die Lagerhalterung Mittel, um die exzentrischen Ringe nach der lagenauen Positionierung der mobilen Drehvorrichtung innerhalb der Bohrungsgasse bzw. innerhalb des Maschinengehäuses gegen ein weiteres gegenseitiges Verdrehen zu sichern und so die Position der mobilen Drehvorrichtung innerhalb der Bohrungsgasse bzw. des Maschinengehäuses zu fixieren.

Weitere Einzelheiten, Merkmale und Vorteile der Erfindung ergeben sich aus der nachfolgenden Beschreibung eines Ausführungsbeispieles mit Bezugnahme auf die zugehörigen Zeichnungen. Es zeigen in:
- Figur 1:: eine mobile Drehvorrichtung, in
- Figur 2:: den Längsschnitt einer mobilen Drehvorrichtung, in
- Figur 3:: eine Exzenterstelleinrichtung, in
- Figur 4:: eine Anordnung einer mobilen Drehvorrichtung in einem Maschinengehäuse und in
- Figur 5:: eine Anordnung von zwei mobilen Drehvorrichtungen in einem Maschinengehäuse.

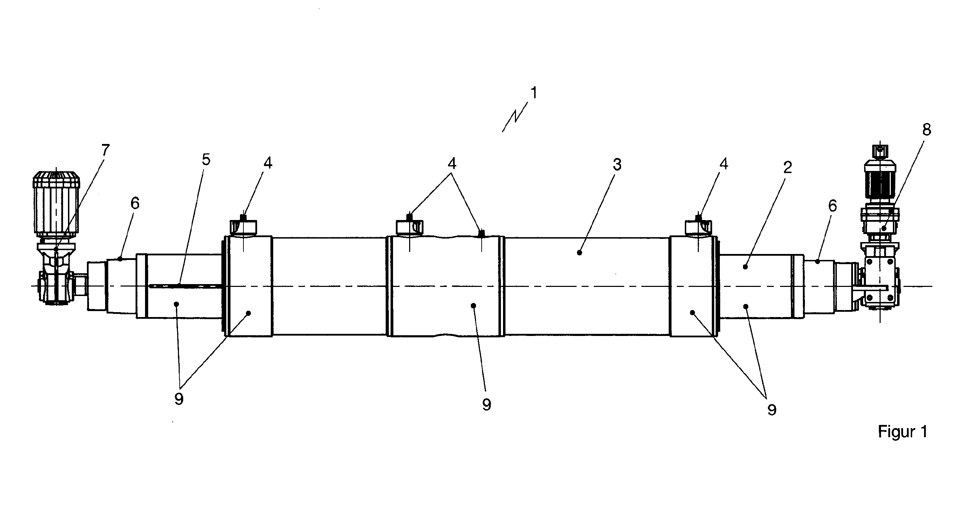

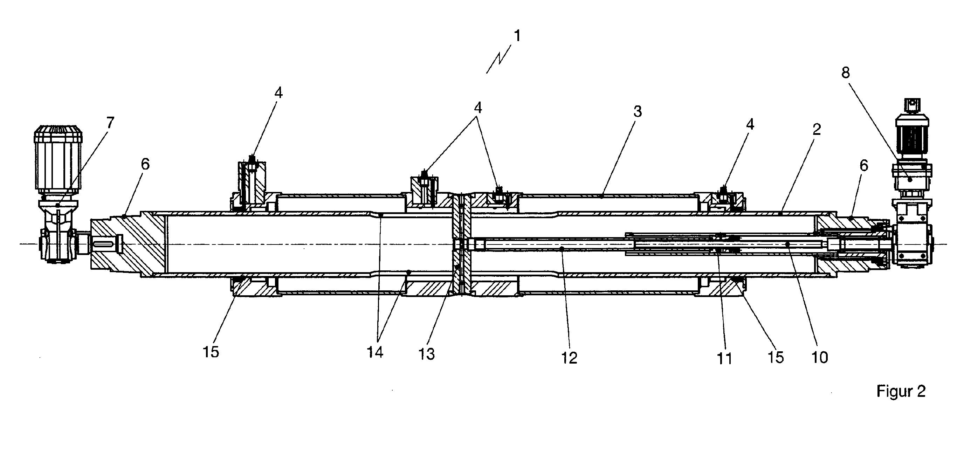

Die in Figur 1 gezeigte mobile Drehvorrichtung 1 umfasst eine Welle 2 und einen die Welle 2 in Längsrichtung zu mehr als 2/3 ihrer Länge umhüllenden Werkzeugträger 3. Der Werkzeugträger 3 ist rohrförmig ausgebildet und stützt sich an seinen beiden stirnseitigen Enden auf der Welle 2 ab. Am Werkzeugträger 3 sind Mittel zur Aufnahme und lagegenauen Positionierung von Schneidmitteln 4 angebracht. Der Werkzeugträger 3 ist über eine Passfeder 5 mit der Welle 2 drehfest verbunden, jedoch in Längsrichtung der Welle 2 gegenüber der Welle 2 verschiebbar. Die Enden der Welle 2 sind als Lagerzapfen 6 ausgebildet. An einem Wellenende, in der vorliegenden Abbildung dem linken Wellenende, befindet sich eine Antriebseinrichtung 7, mittels derer die mobile Drehvorrichtung 1 in eine Drebewegung um ihre Längsachse versetzbar ist, am anderen Wellenende, in der vorliegenden Abbildung dem rechten Wellenende, befindet sich eine Stelleinrichtung 8, mittels derer der Werkzeugträger 3 in Längsrichtung der Welle 2 verschiebbar ist. Die Drehachsen der Motoren der Antriebseinrichtung 7 und der Stelleinrichtung 8 liegen jeweils in einem Winkel von etwa 90° zur Längsachse der Welle 2. Bereiche der Umfangsfläche der Welle 2 und Bereiche der Umfangsfläche des Werkzeugträgers 3 sind als Messflächen 9 ausgebildet. Der Werkzeugträger 3 ist in Längsrichtung der Welle 2 etwa mittig positioniert, so dass die beiden freien Enden der Welle 2 etwa gleich lang sind. Figur 2 zeigt einen Längsschnitt durch die vorbeschriebene mobile Drehvorrichtung 1. Die Welle 2 ist als Hohlwelle ausgebildet, wobei die beiden als Lagerzapfen 6 ausgebildeten Wellenenden aus Vollmaterial bestehen. Hergestellt ist die Welle 2 als Schweisskonstruktion, wobei stirnseitig in ein Rohr die beiden Lagerzapfen 6 angeschweißt sind. Ausgehend von der Stelleinrichtung 8 zum Verschieben des Werkzeugträgers 3 in Längsrichtung der Welle 2 verläuft innerhalb der Welle 2 eine mittels der Stelleinrichtung 8 drehbare Spindel 10. Auf der Spindel 10 ist eine Spindelmutter 11 angeordnet, die bei Drehung der Spindel 10 in Längsrichtung der Spindel bzw. der Welle 2 verschoben wird. Die Spindelmutter 11 ist mit einem Vorschubbrohr 12 verbunden, das mit seinem freien Ende mit einem quer zur Längsachse der Welle 2 angeordneten Lagerbolzen 13 über ein Drehlager verbunden ist, wobei die Verbindung so ausgebildet ist, dass der Lagerbolzen 13 um die Längsachse der Welle 2 drehbar ist, jedoch in Längsrichtung des Vorschubrohres 12 eine Kraftübertragung auf den Lagerbolzen erfolgt, so dass dieser beim Verschieben des Vorschubrohres 12 in Längsrichtung der Welle 2 in gleicher Weise in Längsrichtung verschoben wird. Die beiden Enden des Lagerbolzens 13 greifen durch in die Welle 2 eingearbeitete Längsnuten 14 hindurch und sind mit dem Werzeugträger 3 fest verbunden. An den stirnseitigen Enden des Werkzeugträgers 3 sind die Welle 2 im Umfang umschließende Gleitlager 15 angeordnet, mittels derer eine Abstützung des Werkzeugträgers 3 auf der Umfangsfläche der Welle 2 bewirkt wird. Über die Gleitlager 15 können Querkräfte von der Welle 2 auf den Werkzeugträger 3 und umgekehrt übertragen werden, so dass Welle 2 und Werkzeugträger 3 Querkräfte gemeinsam aufnehmen und eine quer zur Längsachse biegesteife Drehvorrichtung 1 bilden.

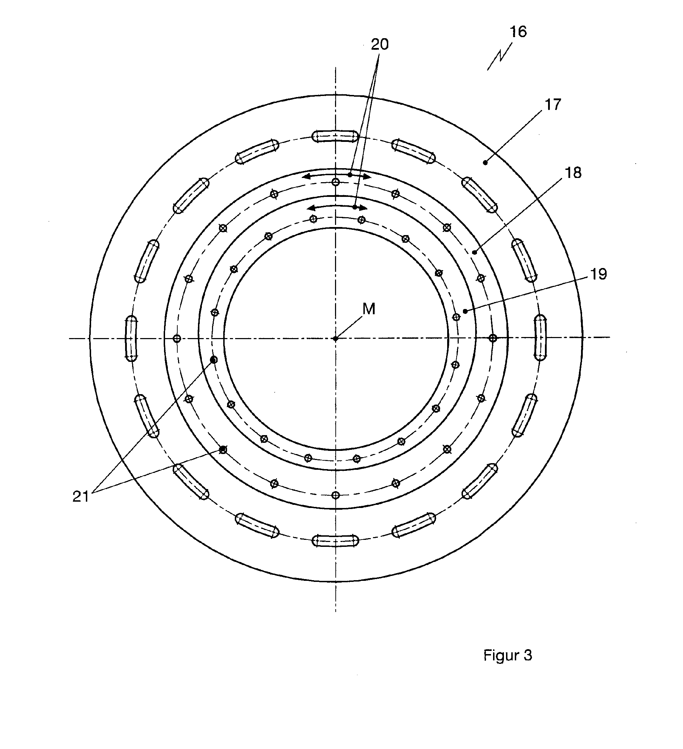

Die in Figur 3 gezeigte Exzenterstelleinrichtung 16 umfasst einen Lagerring 17 und zwei als Lagerbuchsen ausgebildete exzentrische Ringe 18 und 19. Die äußere Lagerbuchse 18 besitzt einen Innenexzenter und die innere Lagerbuchse 19 einen Außenexzenter. Der Innenexzenter der äußeren Lagerbuchse 18 und der Außenexzenter der inneren Lagerbuchse 19 korrespondieren in ihren Abmessungen, so dass die innere Lagerbuchse 19 in die äußere Lagerbuchse 18 eingepasst ist. Die beiden Lagerbuchsen 18, 19 sind gegeneinander verdrehbar, wie durch die Pfeile 20 veranschaulicht, angeordnet. Durch gegenseitiges Verdrehen der beiden Lagerbuchsen 18, 19 kann der Mittelpunkt M der inneren Lagerbuchse 19, der gleichzeitig der Drehpunkt des Lagers ist, durch den die Längsachse der mobilen Drehvorrichtung 1 bzw. der Welle 2 verläuft, verschoben werden. In der inneren Lagerbuchse 19 ist ein nicht dargestelltes Wälzlager zur Aufnahme eines Lagerzapfens 6 der Welle 2 angeordnet. Das Wälzlager ist so ausgebildet, dass es eine Neigung der Längsachse der Welle 2 infolge eines Verschiebens des Mittelpunktes des Lagers ausgleicht. Die äußere und die innere Lagerbuchse 18, 19 weisen Bohrungen 21 für den Eingriff von Werkzeugen zum Verdrehen der Lagerbuchsen 18, 19 auf. Die Lagerbuchsen sind mittels nicht dargestellter Klemmringe in ihrer Lage zueinander sowie gegenüber dem Lagerring 17 fixierbar.

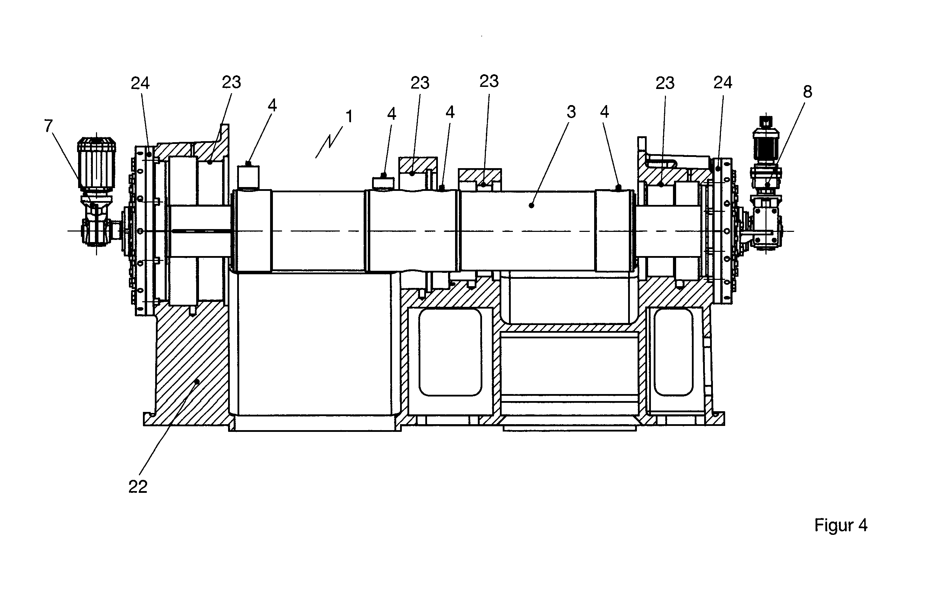

Figur 4 zeigt die Anordnung der mobilen Drehvorrichtung 1 in einem im Schnitt dargestellten Maschinengehäuse 22. Die mobile Drehvorrichtung 1 ist in einer vier zu bearbeitende Bohrungen 23 aufweisenden Bohrungsgasse angeordnet. Sie durchspannt die Bohrungsgasse und ist in zwei Lagern, die durch die beiden an den Außenseiten der Außenwände des Maschinengehäuses 22 angebrachten Lagerhalterungen 24 gehalten werden, gelagert. Beide Lagerhalterungen 24 weisen in Figur 4 nicht dargestellte Exzenterstelleinrichtungen 16 auf, mittels derer die mobile Drehvorrichtung 1 bezüglich ihrer Längsachse in der Bohrungsgasse ausgerichtet werden kann. Anhand der Messflächen an der Welle 2 bzw. dem Werkzeugträger 3 kann die mobile Drehvorrichtung 1 in das Maschinengehäuse eingemessen werden. Zur Bearbeitung der Bohrungen 23 wird der Werkzeugträger 3 mittels der Stelleinrichtung 8 entlang der Längsachse der mobilen Drehvorrichtung 1 soweit verschoben, bis ein oder mehrere am Werkzeugträger 3 angebrachte Schneidmittel 4 in Bearbeitungpostion gegenüber der oder den zu bearbeitende/nBohrung/en 23 stehen. Durch die Antriebseinrichtung 7 wird die mobile Drehinrichtung in Drehung versetzt und der Bearbeitungsvorgang beginnt, wobei die Stelleinrichtung 8 als Vorschubeinrichtung für die Schneidmittel 8 fungiert, indem der Werzeugträger 3 entlang der Längsachse der mobilen Drehvorrichtung verschoben wird. Ja nach Position der Schneidmittel 4 können mehrere oder alle Bohrungen 23 der Bohrungsgasse parallel oder in Gruppen oder einzeln nacheinander bearbeitet werden. Die mobile Drehvorrichtung 1 ist aufgrund ihres Aufbaus mit einer Welle 2 und einem die Welle 2 bezüglich ihrer Länge zu mehr als 2/3 umhüllenden Werkzeugträger 3, der sich auf der Mantelfläche der Welle 2 abstützt, mechanisch besonders stabil und weist auch bei erheblichen Querkräften, resultierend aus dem Gewicht der mobilen Drehvorrichtung 1 und den bei der Bearbeitung der Bohrungen 23 auftretenden Schnittkräften, keine nenneswerte Durchbiegung auf. Demgemäß ist eine maßgenaue Bearbeitung der Bohrungen 23 möglich, und zwar sowohl jeder einzelnen Bohrung 23 als auch der bezüglich der Lage der Bohrungen 23 in der Bohrungsgasse.

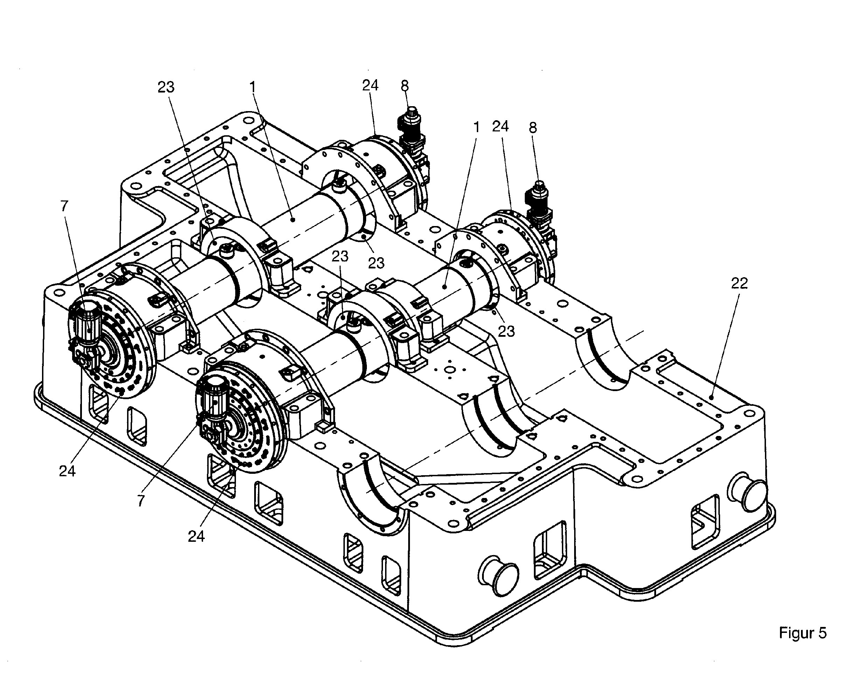

Figur 5 zeigt die Anordnung von zwei mobilen Drehvorrichtungen 1 in einem Maschinengehäuse 22. Dabei ist jede mobile Drehvorrichtung 1, wie vorstehend beschrieben, in einer Bohrungsgasse angeordnet. Zur Realisierung der Drehbewegung der mobilen Drehvorrichtung 1 gegenüber dem Maschinengehäuse 22 ist die Antriebseinheit 7 drehfest mit der am Maschinengehäuse 22 angebrachten Lagerhalterung 24 verbunden. Ebenso ist der Antrieb der Stelleinrichtung 8 drehfest mit der an der gegenüberliegenden Seite des Maschinengehäuse 22 angebrachten Lagerhalterung 24 verbunden.

### Liste der verwendeten Bezugszeichen

- 1: Mobile Drehvorrichtung
- 2: Welle
- 3: Werkzeugträger
- 4: Schneidmittel
- 5: Passfeder
- 6: Lagerzapfen
- 7: Antriebseinrichtung
- 8: Stelleinrichtung
- 9: Messflächen
- 10: Spindel
- 11: Spindelmutter
- 12: Vorschubrohr
- 13: Lagerbolzen
- 14: Längsnut
- 15: Gleitlager
- 16: Exzenterstelleinrichtung
- 17: Lagerring
- 18: Äußere Lagerbuchse
- 19: Innere Lagerbuchse
- 20: Pfeil
- 21: Bohrung
- 22: Maschinengehäuse
- 23: Zu berabeitende Bohrungen
- 24: Lagerhalterung
- M: Mittelpunkt des Lagers

## Patentansprüche

1. Mobile Drehvorrichtung (1) zur Bearbeitung fluchtender Bohrungen (23) in einem Maschinengehäuse (22), wobei die fluchtenden Bohrungen (23) eine Bohrungsgasse bilden und die jeweils äußeren Bohrungen (23) der Bohrungsgasse in sich gegenüberliegenden Außenwänden des Maschinengehäuses (22) liegen, eine Welle (2) und einen Werkzeugträger (3) zur Aufnahme eines Schneidmittels (4) aufweisend,
**dadurch gekennzeichnet, dass**
die Welle (2) länger als die Bohrungsgasse ausgebildet ist, dass der Werkzeugträger (3) rohrförmig ausgebildet ist und in Längsrichtung der Welle (2) verschiebbarer und mit der Welle (2) drehverbunden ist und die Welle (2) in Längsrichtung zu mindestens 50 % ihrer Länge, bevorzugt zu mehr als 2/3 ihrer Länge umhüllt, wobei die beiden Wellenenden nicht vom Werkzeugträger (3) umhüllt sind, dass sich der Werkzeugträger (3) mindestens an seinen beiden stirnseitigen Enden auf der Welle (2) abstützt, dass an einem Wellenende eine die mobile Drehvorrichtung in Drehbewegung versetzende Antriebseinrichtung (7) angeordnet ist, dass an dem anderen Wellenende eine Stelleinrichtung (8) angeordnet ist, mittels derer der Werkzeugträger (3) in Längsrichtung der Welle verschiebbar ist und dass der Werkzeugträger (3) Mittel zur lagegenauen Anordnung mehrerer Schneidmittel (4) aufweist.

2. Mobile Drehvorrichtung (1) nach Anspruch 1,
**dadurch gekennzeichnet, dass**
die Welle (2) als Hohlwelle ausgebildet ist und die Verschiebung des Werkzeugträgers (3) in Längsrichtung der Welle (2) mittels einer im inneren der Welle (2) verlaufenden, mittels der Stelleinrichtung (8) drehbaren Spindel (10) in Wirkverbindung mit einer mit dem Werkzeugträger (3) verbundenen Spindelmutter (11) erfolgt, wobei die Verbindung zwischen der Spindelmutter (11) und dem Werkzeugträger (3) derart drehbeweglich ausgebildet ist, dass eine Drehbewegung zwischen Werkzeugträger (3) und Spindelmutter (11) keine Längsverschiebung des Werkzeugträgers (3) bewirkt.

3. Mobile Drehvorrichtung (1) nach Anspruch 1 oder 2,
**dadurch gekennzeichnet, dass**
die Drehachsen der Motoren der Antriebseinrichtung (7) zur Erzeugung der Drehung der mobilen Drehvorrichtung (1) und der Stelleinrichtung (8) zum Verschieben des Werkzeugträgers (3) in Längsrichtung der Welle (2) jeweils etwa im Winkel von 90° zur Längsachse der Welle (2) stehen.

4. Mobile Drehvorrichtung (1) nach Anspruch 3,
**dadurch gekennzeichnet, dass**
die Antriebseinrichtung (7) zur Erzeugung der Drehung der mobilen Drehvorrichtung (1) und die Stelleinrichtung (8) zum Verschieben des Werkzeugträgers (3) in Längsrichtung der Welle (2) um die Längsachse der Welle (2) verdrehbar angeordnet sind.

5. Mobile Drehvorrichtung nach Anspruch 1 bis 4,
**dadurch gekennzeichnet, dass**
auf der Umfangsfläche der Welle(2) und der Umfangsfläche des Werkzeugträgers (3) Messflächen (9) ausgebildet sind.

6. Anordnung der mobile Drehvorrichtung (1) nach Anspruch 1 an einem Maschinengehäuse (22) zur Bearbeitung fluchtender Bohrungen (23) in dem Maschinengehäuse (22), wobei die fluchtenden Bohrungen (23) eine Bohrungsgasse bilden und die jeweils äußeren Bohrungen (23) der Bohrungsgasse in sich gegenüberliegenden Außenwänden des Maschinengehäuses (22) liegen,
**dadurch gekennzeichnet, dass**
an den Außenseiten der Außenwände des Maschinengehäuses (22), die jeweils äußeren Bohrungen (23) der Bohrungsgasse umgebend, Lagerhalterungen (24) zur Halterung von Lagern für die Lagerung der beiden Wellenenden der Welle (2) der mobilen Drehvorrichtung (1) vorgesehen sind, mittels derer die mobile Drehvorrichtung (1) in dem Maschinengehäuse (22), die zu bearbeitende Bohrungsgasse durchspannend, drehbar gelagert wird, und dass diese Lagerhalterungen (24) Mittel zum Verschieben der Lager in etwa quer zur Längsachse der mobilen Drehvorrichtung (1) liegenden Ebenen umfassen, derart, dass die Längsachse der mobilen Drehvorrichtung (1) gegenüber der Achse der Bohrungsgasse verschieb- und neigbar ist.

7. Anordnung nach Anspruch 6,
**dadurch gekennzeichnet, dass**
die Mittel zum Verschieben der Lager in den etwa quer zur Längsachse der mobilen Drehvorrichtung (1) liegenden Ebenen Exzenterstelleinrichtungen (16) sind.

8. Anordnung nach Anspruch 7,
**dadurch gekennzeichnet, dass**
eine Exzenterstelleinrichtung (16) von zwei in einer besagten, etwa quer zur Längsachse der mobilen Drehvorrichtung (1) liegenden Ebene liegenden, ineinanderliegenden exzentrischen Ringen (18, 19) gebildet wird, wobei das Lager zur Lagerung der mobilen Drehvorrichtung (1) innerhalb des inneren Ringes (19) angeordnet ist und durch Verdrehen der Ringe (18, 19) gegeneinander der Drehpunkt (M) des Lagers in besagter, etwa quer zur Längsachse der mobilen Drehvorrichtung (1) liegenden Ebene verschiebbar ist.
